(19) Europäisches Patentamt
European Patent Office
Office européen des brevets

(11) **EP 3 880 398 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **19808960.9**

(22) Anmeldetag: **11.11.2019**

(51) Internationale Patentklassifikation (IPC):
**B23K 26/06** (2014.01) **B23K 26/067** (2006.01)
**B23K 26/073** (2006.01) **B23K 26/24** (2014.01)

(52) Gemeinsame Patentklassifikation (CPC):
**B23K 26/24; B23K 26/0604; B23K 26/0608; B23K 26/0676; B23K 26/073**

(86) Internationale Anmeldenummer:
**PCT/EP2019/080878**

(87) Internationale Veröffentlichungsnummer:
**WO 2020/099326 (22.05.2020 Gazette 2020/21)**

(54) **VERFAHREN ZUM SPRITZERFREIEN SCHWEISSEN, INSBESONDERE MIT EINEM FESTKÖRPERLASER**

METHOD FOR SPLASH-FREE WELDING, IN PARTICULAR WITH A SOLID-STATE LASER

PROCÉDÉ DE SOUDAGE SANS ÉCLABOUSSURES, NOTAMMENT AVEC UN LASER À L'ÉTAT SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2018 DE 102018219280**

(43) Veröffentlichungstag der Anmeldung:
**22.09.2021 Patentblatt 2021/38**

(73) Patentinhaber: **TRUMPF Laser- und Systemtechnik SE**
**71254 Ditzingen (DE)**

(72) Erfinder:
• **HAUG, Patrick**
**70839 Gerlingen (DE)**
• **SPEKER, Nicolai**
**74385 Pleidelsheim (DE)**
• **OPITZ, Marco**
**71229 Leonberg (DE)**
• **HESSE, Tim**
**71254 Ditzingen (DE)**

(74) Vertreter: **Trumpf Patentabteilung**
**Trumpf GmbH & Co KG**
**TH550 Patente und Lizenzen**
**Johann-Maus-Straße 2**
**71254 Ditzingen (DE)**

(56) Entgegenhaltungen:
WO-A1-2018/159857    JP-A- 2002 219 590
JP-A- 2009 178 768    JP-A- 2010 240 734
US-A1- 2014 076 865    US-A1- 2016 368 089
US-A1- 2018 236 600

# Beschreibung

Hintergrund der Erfindung

Die Erfindung betrifft ein Verfahren zum Laserstrahl-Schweißen eines Werkstücks,

wobei auf dem Werkstück zumindest mit einem ersten Laserstrahl eine erste Strahlfläche und mit einem zweiten Laserstrahl eine zweite Strahlfläche erzeugt und relativ zum Werkstück entlang einer Vorschubrichtung geführt werden, wobei die Flächenschwerpunkte der ersten Strahlfläche und der zweiten Strahlfläche nicht übereinstimmen und die erste Strahlfläche der zweiten Strahlfläche vorausläuft, und wobei eine Längenerstreckung $LE_1$ der ersten Strahlfläche, gemessen quer zur Vorschubrichtung, größer oder gleich ist der Längenerstreckung $LE_2$ der zweiten Strahlfläche.

Ein solches Verfahren ist aus der DE 10 2015 112 537 A1 bekannt geworden.

Laserstrahlschweißen wird eingesetzt, wenn Bauteile mit hoher Schweißgeschwindigkeit, schmaler und schlanker Schweißnahtform und geringem thermischen Verzug verschweißt werden sollen. Durch den Laserstrahl wird im Bereich eines Stoßes der zu fügenden Werkstückteile ein flüssiges Schmelzbad erzeugt. Nach dem Erstarren des Schmelzbades sind die Bauteile fest miteinander verbunden. Verbreitete Lasertypen für das Laserstrahlschweißen sind insbesondere $CO_2$-Laser und Festkörper- und Diodenlaser.

Das Laserstrahlschweißen von Metallen findet typischerweise als Tiefschweißen statt. Beim Laserstrahltiefschweißen wird durch die Relativbewegung zwischen Laserstrahl und Werkstück eine Dampfkapillare (Keyhole) durch das flüssige Schmelzbad bewegt. Bei zu hoher Vorschubgeschwindigkeit löst sich hierbei eine Vielzahl an Schmelzspritzern ab und es reduziert sich die Qualität der Schweißnaht durch Bildung von Kerben. Grundsätzlich gilt, dass mit steigender absorbierter Energie die Schmelzflussdynamik zunimmt und dass bei Erreichen kritischer Werte die oben genannten negativen Effekte auftreten, welche einen Masseverlust der Naht und/oder ein ausgeprägt zyklisches Schmelzflussverhalten bewirken.

Wird ein Laserstrahl eines Festkörperlasers mit hoher Brillanz und kleinem Fokusdurchmesser verwendet, so verschiebt sich aufgrund der gegenüber $CO_2$-Lasern gesteigerten Leistungsdichte die Grenze für eine spritzerarme Schweißnahtqualität zu niedrigeren Vorschubgeschwindigkeiten. Die Schmelzflussgeschwindigkeit und die Schmelzbaddynamik (Turbulenz) wird gesteigert, was verstärkt zu Schweißnahtfehlern führt.

Für Durchschweißprozesse, etwa im Stumpfstoß, bei denen eine sich über die gesamte Werkstückdicke erstreckende Schweißnaht erzeugt wird, werden üblicherweise $CO_2$-Laser eingesetzt. Es wäre jedoch wünschenswert, die $CO_2$-Laser durch Festkörperlaser zu ersetzen, um Einsparungen bei den Energiekosten zu erreichen.

Für Einschweißungen in Überlappstöße hat sich gezeigt, dass eine koaxiale Überlagerung eines ersten Laserstrahls mit größerem Fokusdurchmesser mit einem zweiten Laserstrahl mit kleinerem Fokusdurchmesser dazu führt, dass die Bildung von nach oben aus dem Schmelzbad herausgeschleuderten Spritzern deutlich reduziert werden kann, vgl. DE 10 2016 222 357 A1 oder WO 2018/011456 A1.

Bei Versuchen zur Anwendung dieses Verfahrens für Tief- oder Durchschweißungen beobachteten jedoch die Erfinder, dass der kleine Durchmesser des zweiten Strahls (Kernstrahl) zu Spritzern an der Nahtunterseite führt, so dass dieses Verfahren für Durchschweißungen mit hoher Qualität an der Nahtober- und Nahtunterseite nicht geeignet ist.

Zur Beeinflussung der Schmelzbaddynamik sind im Stand der Technik verschiedene weitere Verfahren vorgeschlagen worden:

Aus der DE 102 61 422 A1 ist ein Laserschweiß- und -lötverfahren bekannt, bei dem der Laserstrahl in wenigstens zwei getrennt fokussierbare Teilstrahlen aufgeteilt wird und bei dem die Aufteilung der Intensität und die Auftrefforte der Teillaserstrahlen durch eine variable optische Anordnung eingestellt werden können.

Aus der EP 1 007 267 B1, der JP 2004 358 521 A und der JP 2004 154 813 A sind Laserschweißverfahren bekannt geworden, bei denen verschiedene Laserstrahlen oder Teilstrahlen eines Laserstrahls so auf das Werkstück fokussiert werden, dass deren Fokuspunkte in Strahlausbreitungsrichtung innerhalb des Werkstücks zueinander versetzt angeordnet sind. Dabei können die Strahlachsen der Laser- bzw. Teilstrahlen zueinander versetzt, also nicht-konzentrisch zueinander, angeordnet sein.

Aus der DE 10 2015 207 279 A1 ist ein Laserschweißverfahren bekannt geworden, bei dem eine Mehrkernfaser mit parallel nebeneinanderliegenden Faserkernen unterschiedlichen Durchmessers als Transportfaser für den Laserstrahl eingesetzt wird, so dass auf der Werkstückoberfläche zwei einer größeren Fokusfläche (Hauptspot) vorlaufende kleinere Fokusflächen (Nebenspots) mit geringerer Laserleistung gebildet werden.

Aus DE 10 2015 112 537 A1 ist ein Laserschweißverfahren bekannt geworden, bei dem auf dem Werkstück ein runder oder quadratischer Hauptspot und quer vorlaufend ein Linienfokus oder zwei Nebenspots mit geringerer Ausdehnung gebildet sind. Die Aufteilung der Laserleistung auf den Hauptspot und die Nebenspots ist durch eine Verschiebebewegung eines strahlformenden Optikmoduls einstellbar.

Aus der US 2014 076 865 A1, welche den Oberbegriff des Anspruchs 1 offenbart, ist ein Laserschweißverfahren bekannt geworden, bei dem ein vorlaufender Laserstrahl und ein nachlaufender Laserstrahl jeweils schräg auf das Werkstück gerichtet werden, wobei die Neigung des vorlaufenden Laserstrahls größer ist als die Neigung des nachlaufenden Laserstrahls. Weitere Verfahren mit zwei in Vorschubrichtung zueinander versetzten Laserstrahlen sind in der JP 2009 178 768 A und der JP 2002 219590 A beschrieben.

Ein vorlaufender Linienfokus, der aus mehreren nebeneinander angeordneten kreisförmigen Nebenspots zusammengesetzt sein kann, ist auch aus der DE 10 2016 218 938 A1 bekannt.

Aus der US 2017 0368638 A1 und der US 2018 0217408 A1 ist ein vorlaufender bogenförmiger Spot bekannt.

Aus der WO 2018 099 851 A1 und der DE 10 2016 105 214 A1 ist es bekannt, einen Haupt- und zwei Nebenspots zum Schweißen oder Löten mit Hilfe diffraktiver oder refraktiver optischer Elemente zu erzeugen. Aus der WO 2018 054 850 A1 ist es bekannt, eine Strahlformung zur Erzeugung einer gewünschten Energieverteilung in der Fokusfläche mit Hilfe einer Scanner-Optik vorzunehmen.

## Aufgabe der Erfindung

Es ist Aufgabe der Erfindung, ein Schweißverfahren vorzustellen, mit dem bei guter Nahtqualität Werkstücke über ihre volle Werkstückdicke mit hoher Vorschubgeschwindigkeit geschweißt werden können.

## Kurze Beschreibung der Erfindung

Diese Aufgabe wird erfindungsgemäß gelöst durch ein Verfahren der eingangs genannten Art, das dadurch gekennzeichnet ist,

> dass der Flächeninhalt der ersten Strahlfläche größer ist als der Flächeninhalt der zweiten Strahlfläche,
> dass eine Breitenerstreckung $BE_1$ der ersten Strahlfläche, gemessen entlang der Vorschubrichtung, größer oder gleich ist einer Breitenerstreckung $BE_2$ der zweiten Strahlfläche,
> dass eine Laserleistung des ersten Laserstrahls größer ist als eine Laserleistung des zweiten Laserstrahls,
> und dass der zweite Laserstrahl in ein durch den ersten Laserstrahl erzeugtes Schmelzbad eingestrahlt wird.

Der erste Laserstrahl und der zweite Laserstrahl können dabei voneinander unabhängig erzeugt werden, oder auch durch Aufteilen eines gemeinsamen Ursprungs-Laserstrahls erzeugt werden (Aufteilung des Ursprungslaserstrahls in Teilstrahlen).

Die Erfindung schlägt vor, auf dem Werkstück eine vorlaufende größere erste Strahlfläche (vorlaufender Spot) und eine nachlaufende kleinere zweite Strahlfläche (nachlaufender Spot) zu erzeugen, deren Mittelpunkte (Flächenschwerpunkte) nicht übereinstimmen, wobei die Länge (quer zur Vorschubrichtung) und die Breite (entlang der Vorschubrichtung) des vorlaufenden Spots mindestens so groß sind wie der Durchmesser bzw. die entsprechende Dimension des nachlaufenden Spots, und wobei die Laserleistung des vorlaufenden Laserstrahls höher ist als die Laserleistung des nachlaufenden Laserstrahls.

Die Erfinder haben erkannt, dass es für eine gute Qualität der Nahtober- und Nahtunterseite bei gleichzeitig hohem Vorschub notwendig ist, dass der vorlaufende Spot die Bildung eines Schmelzbades mit ausreichend großem Durchmesser bzw. ausreichend großer Fläche (entlang und quer zur Vorschubrichtung) initiiert. Der vorlaufende Strahl muss außerdem eine ausreichend hohe Laserleistung aufweisen, um einen zusammenhängenden Schmelzefilm an der Werkstückoberfläche zu erzeugen. In das so gebildete Schmelzbad wird der zweite Strahl fokussiert.

Im Rahmen der Erfindung kann der Energieeintrag in das Werkstück bzw. in die zu verschweißenden Werkstückteile gering gehalten werden, und eine geringe Schmelzbaddynamik erreicht werden. Insbesondere kann eine Spritzerbildung an der Nahtunterseite minimiert werden.

Das erfindungsgemäße Verfahren kann auf diese Weise als tiefes Einschweißen bzw. als Durchschweißung betrieben werden, d.h. das Werkstück wird während des Schweißprozesses bis zur Werkstückunterseite aufgeschmolzen. Das Verfahren erfolgt im Tiefschweißregime, d.h. im Schmelzbad wird eine Dampfkapillare (keyhole) erzeugt. Bevorzugt treten die Laserstrahlen an der Unterseite des Werkstücks nicht aus dem Werkstück aus, sondern die Dampfkapillare (keyhole) bleibt an der Werkstückunterseite geschlossen.

Beim Führen der Laserstrahlen relativ zum Werkstück können die Laserstrahlen und/oder das Werkstück bewegt werden.

Die erste Strahlfläche ist typischerweise rechteckförmig oder kreisringausschnittförmig ausgebildet, oder aus mehreren Teilstrahlflächen zusammengesetzt, die typischerweise rechteckförmig oder kreisringausschnittförmig ausgebildet sind. Wenn die erste Strahlfläche aus separaten Teilstrahlflächen zusammengesetzt ist, gelten die erfindungsgemäßen Bedingungen der ersten Strahlfläche für die Gesamtheit (Summe) der Teilstrahlflächen. Die zweite Strahlfläche ist typischerweise kreisförmig oder quadratisch ausgebildet. Die erste Strahlfläche und die zweite Strahlfläche sind typischerweise beide spiegelsymmetrisch zu einer Ebene, die die Vorschubrichtung enthält, angeordnet.

Die erste Strahlfläche wird als gegenüber der zweiten Strahlfläche als vorauslaufend angesehen, wenn der Flächenschwerpunkt der ersten Strahlfläche bezüglich der Vorschubrichtung vor dem Flächenschwerpunkt der zweiten Strahlfläche liegt; die beiden Strahlflächen können im Rahmen der Erfindung ganz oder teilweise überlappend oder auch bevorzugt voneinander separat (nicht überlappend) angeordnet sein.

Bevorzugt sind die Strahldivergenz des ersten Laserstrahls und die Strahldivergenz des zweiten Laserstrahls gleich oder die Strahldivergenz des zweiten Laserstrahls ist kleiner als die Strahldivergenz des ersten Laserstrahls. Dies trägt dazu bei, dass die Energie des zweiten Strahls erst in der unteren Zone der Dampfkapillare absorbiert wird.

Bevorzugt gilt für die Längenerstreckungen der Strahlflächen $LE_1 \geq 1,5*LE_2$ und besonders bevorzugt $LE_1 \geq 2*LE_2$, und weiterhin gilt für die Breitenerstreckungen der Strahlflächen bevorzugt $BE_1 \geq 1,5*BE_2$. Bevorzugt gilt auch für die Laserleistung $LL_1$ (ggf. summiert über alle Teilstrahlflächen) des ersten Laserstrahls und die Laserleistung $LL_2$ des zweiten Laserstrahls weiterhin $LL_1 \geq 1,2*LL_2$ und besonders bevorzugt $LL_1 \geq 1,5*LL_2$. Bevorzugt gilt auch für den (ggf. summierten) Flächeninhalt $FI_1$ des ersten Strahlfläche und den Flächeninhalt $FI_2$ der zweiten Strahlfläche $FI_1 \geq 2*FI_2$, besonders bevorzugt $FI_1 \geq 3*FI_2$, ganz besonders bevorzugt $FI_1 \geq 5*FI_2$.

Das erfindungsgemäße Verfahren kann insbesondere zur Fertigung eines Werkstücks mit Stumpfstoß der zu verschweißenden Werkstückteilstücke eingesetzt werden. Insbesondere können Rohre, Profile und Tailored Welded Blanks nachbearbeitungsfrei hergestellt werden. Sehr gute Nahtqualitäten haben sich insbesondere für Werkstücke mit einer Dicke zwischen 0,5 mm und 3 mm ergeben.

Bei einer bevorzugten Variante des erfindungsgemäßen Verfahrens ist vorgesehen, dass die Laserstrahlen mit einem oder mehreren Festkörperlasern erzeugt werden. Festkörperlaser erlauben die Erzeugung von Laserstrahlen mit einer vergleichsweise hohen Brillanz und kleinem Fokusdurchmesser, wodurch in der Regel die Neigung zur Spritzerbildung an der Nahtoberseite und der Nahtunterseite verstärkt werden, und allgemein Schweißnahtfehler häufiger werden. Im Rahmen des erfindungsgemäßen Verfahrens können sogar bei der Verwendung von Festkörperlasern gute Nahtqualitäten bei hohen Vorschubgeschwindigkeiten in Durchschweißung genutzt werden.

Bevorzugt ist auch eine Variante, bei der ein Fokusdurchmesser $FD_2$ des zweiten Laserstrahls kleiner ist als ein Fokusdurchmesser $FD_1$ des ersten Laserstrahls und eine Leistungsdichte des zweiten Laserstrahls größer ist als eine Leistungsdichte des ersten Laserstrahls. Diese Leistungsdichteverteilung hat sich als günstig für die Nahtqualität erwiesen. Im Bereich des zweiten Laserstrahls dringt die Dampfkapillare tiefer ins Werkstück vor, und kann eine Aufschmelzung des Werkstückmaterials bis zur Werkstückunterseite bewirken. Im Allgemeinen werden der erste und der zweite Laserstrahl typischerweise auf die Werkstückoberfläche fokussiert; es kann aber auch beispielsweise eine Fokuslage unter der Werkstückoberfläche gewählt werden.

Erfindungsgemäß besteht das Werkstück aus Baustahl oder aus Edelstahl und für einen Fokusdurchmesser $FD_2$ des zweiten Laserstrahls gilt mindestens in einer Richtung quer zur Vorschubrichtung:

$$FD_2 \geq d_{Min}, \text{ mit } d_{Min} = \sqrt{\frac{k_{d,Min} \cdot s}{v}},$$

mit $k_{d,Min}$: eine materialspezifische Konstante zwischen 8 und 20 $mm^2/s$ für Baustahl und zwischen 5 und 20 $mm^2/s$ für Edelstahl, mit s: zu schweißende Werkstückdicke, und mit v: Vorschubgeschwindigkeit des Laserstrahl-Schweißens. Bei Einhaltung dieser Bedingung ist die Spritzerneigung an der Nahtunterseite besonders gering. Je dicker das Werkstück, desto größer sollte der Fokusdurchmesser $FD_2$ des zweiten Laserstrahls (mindestens) gewählt werden. Je größer die Vorschubgeschwindigkeit v, desto kleiner kann der Fokusdurchmesser $FD_2$ gewählt werden. Falls der zweite Laserstrahl am Fokus kreisförmig ist, so gilt die obige Bedingung allgemein; falls der Laserstrahl in unterschiedliche Richtungen unterschiedliche Durchmesser aufweisen sollte, so gilt die obige Bedingung für $FD_2$ für den Durchmesser des zweiten Laserstrahls quer zur Vorschubrichtung. In Vorschubrichtung kann der Durchmesser $d_{Min}$ unterschritten werden.

Bei einer vorteilhaften Weiterentwicklung dieser Variante gilt für die Längenerstreckung $LE_1$ der ersten Strahlfläche:

$LE_1 \geq b_{Min}$, mit $b_{Min} = 2*d_{Min}$. Dadurch kann eine weitere Verbesserung der Nahtqualität erreicht werden. Je dicker das Werkstück, desto größer sollte die Längenerstreckung $LE_1$ (mindestens) gewählt werden. Je größer die Vorschubgeschwindigkeit v, desto kleiner kann die Längenerstreckung $LE_1$ gewählt werden. Falls die erste Strahlfläche separate Teilstrahlflächen umfasst, wird die Längenerstreckung $LE_1$ zwischen den in Richtung quer zur Vorschubrichtung am weitesten auseinander liegenden Kanten der Teilstrahlflächen bestimmt.

Ebenso vorteilhaft ist eine Weiterentwicklung der obigen Variante, bei der für einen Abstand a zwischen den Flächenschwerpunkten der ersten Strahlfläche und der zweiten Strahlfläche entlang der Vorschubrichtung gilt:

$a \geq a_{Min}$, mit $a_{Min} = 2*d_{Min}$. Auch dadurch kann eine weitere Verbesserung der Nahtqualität erreicht werden. Je dicker das Werkstück, desto größer sollte der Abstand a (mindestens) gewählt werden. Je größer die Vorschubgeschwindigkeit v, desto kleiner kann der Abstand a gewählt werden. Falls die erste Strahlfläche separate Teilstrahlflächen umfasst, wird der Flächenschwerpunkt der ersten Strahlfläche für die Gesamtheit der Teilstrahlflächen bestimmt.

Bevorzugt ist eine Variante, die vorsieht, dass mehrere Werkstücke unterschiedlicher Werkstückdicke dem Laserstrahl-Schweißen unterzogen werden, und dass ein Abstand a zwischen den Flächenschwerpunkten der ersten Strahlfläche und der zweiten Strahlfläche entlang der Vorschubrichtung für Werkstücke mit größerer Werkstückdicke größer gewählt wird. Durch dieses Vorgehen kann eine Anpassung an die unterschiedlichen Werkstücke bzw. deren Werkstückdicken vorgenommen werden, wodurch eine optimierte Nahtqualität

In einer Variante des Verfahrens überlappen die erste Strahlfläche und die zweite Strahlfläche.

In einer alternativen Variante sind die erste Strahlfläche und die zweite Strahlfläche voneinander getrennt. Durch den räumlichen Abstand des ersten Laserstrahls vom zweiten Laserstrahl können ab der Einwirkung des ersten Laserstrahls bis zur Einwirkung des zweiten Laserstrahls Wärmeleitungs- und Aufschmelzprozesse im Werkstück voranschreiten, wodurch die Bedingungen im Werkstück für die Einwirkung des zweiten Laserstrahls optimiert werden können. Zudem wird meist eine geringere Schmelzbaddynamik erreicht, insbesondere weil sich die Leistungsdichten der beiden Laser nirgends aufaddieren und damit lokale Leistungsdichtespitzen reduziert werden.

Besonders bevorzugt ist eine Variante, bei der die erste Strahlfläche wenigstens zwei in einer Richtung quer zur Vorschubrichtung aufgereihte, voneinander getrennte Teilstrahlflächen umfasst, wobei insbesondere diese Teilstrahlflächen kreisförmig ausgebildet sind. Die Erzeugung einer quer zur Vorschubrichtung ausgedehnten ersten Strahlfläche ist über aufgereihte Teilstrahlflächen besonders einfach, beispielsweise mittels eines Array-Generators aus einem einzelnen Laserstrahl. Die quer zur Vorschubrichtung aufgereihten Teilstrahlflächen werden bevorzugt symmetrisch zur zweiten Strahlfläche angeordnet.

Erfindungsgemäß umfasst die erste Strahlfläche wenigstens zwei in Vorschubrichtung aufgereihte, voneinander getrennte Teilstrahlflächen, insbesondere wobei diese Teilstrahlflächen rechteckförmig oder kreisringausschnittförmig ausgebildet sind. Durch die Nutzung von in Vorschubrichtung aufgereihten Teilstrahlflächen kann der Energieeintrag und die Schmelzbadausbildung vor dem zweiten Laserstrahl gezielt eingestellt werden, insbesondere unter Berücksichtigung der Werkstückdicke. Typischerweise sind alle in Vorschubrichtung aufgereihten Teilstrahlflächen der ersten Strahlfläche bezüglich der Vorschubrichtung vor der zweiten Teilstrahlfläche angeordnet.

Ferner gilt erfindungsgemäß für einen Abstand a' der Flächenschwerpunkte der in Vorschubrichtung vordersten Teilstrahlfläche der ersten Strahlfläche und der zweiten Strahlfläche:

$a' \geq a_{Min}$ , mit $a_{Min}=2*d_{Min}$. Dadurch kann wiederum eine besonders gute Nahtqualität erreicht werden. Je dicker das Werkstück, desto größer sollte der Abstand a' (mindestens) gewählt werden. Je größer die Vorschubgeschwindigkeit, desto kleiner kann der Abstand a' gewählt werden.

Bevorzugt ist zudem eine Weiterentwicklung der obigen Variante, die vorsieht, dass mehrere Werkstücke unterschiedlicher Werkstückdicke dem Laserstrahl-Schweißen unterzogen werden, und dass eine Anzahl NV von in Vorschubrichtung aufgereihten Teilstrahlflächen mit größerer Werkstückdicke größer gewählt wird. Durch dieses Vorgehen kann eine Anpassung an die unterschiedlichen Werkstücke bzw. deren Werkstückdicken vorgenommen werden, wodurch eine optimierte Nahtqualität und Vorschubgeschwindigkeit erreicht werden kann.

Bei einer bevorzugten Variante wird das Laserstrahl-Schweißen als Durchschweißung betrieben. Das Werkstück wird während des Schweißprozesses bis zur Werkstückunterseite aufgeschmolzen. Bevorzugt treten die Laserstrahlen an der Unterseite des Werkstücks nicht aus dem Werkstück aus, sondern die Dampfkapillare (keyhole) bleibt an der Werkstückunterseite geschlossen. Im Rahmen der Erfindung kann eine Spritzerbildung an der Werkstückunterseite minimiert werden und eine hohe Nahtqualität erreicht werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden, im Rahmen der beigefügten Ansprüche. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung schematisch dargestellt und wird anhand von Ausführungsbeispielen näher erläutert.

Fig. 1    zeigt einen Schnitt durch ein Werkstück entlang der Schweißnaht während einer Variante eines nicht erfindungsgemäßen Schweißverfahrens;

Fig. 2    zeigt in einer schematischen Aufsicht eine erste Strahlfläche und eine zweite Strahlfläche (Strahlbild) für ein nicht erfindungsgemäßes Verfahren, in einer Variante mit einem vorauslaufenden rechteckförmigen Spot und einem nachlaufenden kreisförmigen Spot;

Fig. 3    zeigt in einer schematischen Aufsicht eine erste Strahlfläche und eine zweite Strahlfläche für ein nicht erfindungsgemäßes Verfahren, in einer Variante mit einem vorauslaufenden Spot umfassend zwei kreisförmige Teilspots und einem nachlaufenden kreisförmigen Spot;

Fig. 4    zeigt in einer schematischen Aufsicht eine erste Strahlfläche und eine zweite Strahlfläche für ein nicht erfindungsgemäßes Verfahren, in einer Variante mit einer großen kreisförmigen ersten Strahlfläche und einer kleinen kreisförmigen zweiten Strahlfläche, die innerhalb der ersten Strahlfläche liegt;

Fig. 5    zeigt in einer schematischen Aufsicht eine erste Strahlfläche und eine zweite Strahlfläche für ein nicht erfindungsgemäßes Verfahren, in einer Variante mit einer großen kreisförmigen ersten Strahlfläche und einer kleinen kreisförmigen zweiten Strahlfläche, die die separat von der ersten Strahlfläche liegt;

Fig. 6    zeigt in einer schematischen Aufsicht eine erste Strahlfläche und eine zweite Strahlfläche für ein nicht erfindungsgemäßes Verfahren, in einer Variante mit einer kreisringausschnittförmigen ersten Strahlfläche und einer kreisförmigen zweiten Strahlfläche;

Fig. 7    zeigt in einer schematischen Aufsicht eine erste Strahlfläche und eine zweite Strahlfläche für das erfindungsgemäße Verfahren, in einer Variante mit mehreren rechteckförmigen Teilstrahlflächen der ersten Strahlfläche und einer kreisförmigen zweiten Strahlfläche;

Fig. 8    zeigt in einer schematischen Aufsicht eine erste Strahlfläche und eine zweite Strahlfläche für das erfindungsgemäße Verfahren, in einer Variante mit mehreren kreisringausschnittförmigen Teilstrahlflächen der ersten Strahlfläche und einer kreisförmigen zweiten Strahlfläche.

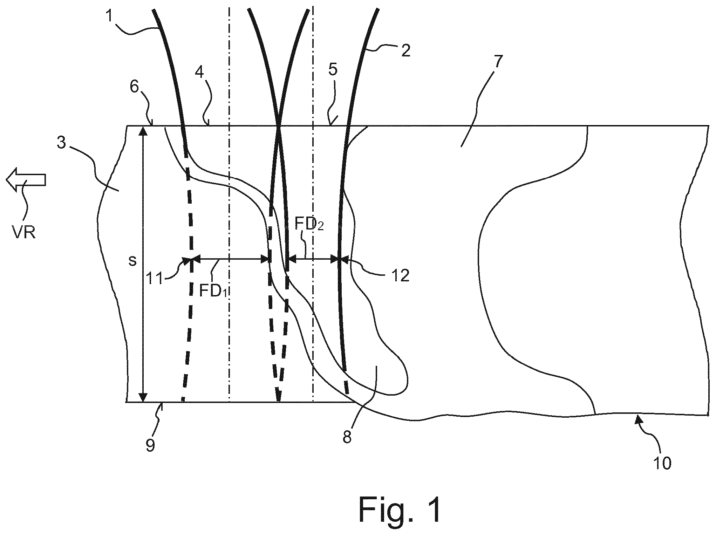

Die **Fig. 1** zeigt in einer Schnittansicht entlang der Vorschubrichtung VR der Laserstrahlen 1, 2 ein zu schweißendes Werkstück 3 während eines nicht erfindungsgemäßen Schweißverfahrens. Das Werkstück 3 besteht aus zwei Werkstückteilen, von denen ein erster Werkstückteil oberhalb der Zeichenebene liegt, und ein zweiter Werkstückteil unterhalb der Zeichenebene liegt. In der Zeichenebene der Fig. 1 liegt eine Kontaktfläche der Werkstückteile, die im Stumpfstoß miteinander verschweißt werden. Das Werkstück 3 weist eine Werkstückdicke s auf. Der erste Laserstrahl 1 erzeugt an der Oberseite 6 des Werkstücks 3 eine erste Strahlfläche 4, und der zweite Laserstrahl 2 erzeugt an der Oberseite des Werkstücks 3 eine zweite Strahlfläche 5. In der gezeigten Variante grenzen die beiden Strahlflächen 4, 5 an der Oberseite 6 (in der Projektion der Fig. 1) gerade aneinander an, und die Laserstrahlen 1, 2 weisen senkrecht zur Oberseite 6 des Werkstücks 3 verlaufende Strahlachsen auf.

Die beiden Laserstrahlen 1, 2 erzeugen im Werkstück 3 ein ausgedehntes Schmelzbad 7 und innerhalb des Schmelzbades 7 eine Dampfkapillare (keyhole) 8. In der gezeigten Variante liegt eine "vereinte" Dampfkapillare 8 vor, die sich sowohl im Bereich des ersten Laserstrahls 1 als auch im Bereich des zweiten Laserstrahls 2 und auch ein wenig darüber hinaus erstreckt; die Leistungsdichte eines jeden der Laserstrahlen 1, 2 reicht also aus, um Werkstückmaterial lokal zu verdampfen. Allerdings reicht die Dampfkapillare 8 im Bereich des zweiten Laserstrahls 2 tiefer in das Werkstücks 3 hinein.

Das Schmelzbad 7 reicht hier bis zur Unterseite 9 des Werksstücks 3, d.h. das Werkstück 3 wird bis zur und einschließlich der Unterseite 9 aufgeschmolzen ("Durchschweißung"). Die Dampfkapillare 8 ist in der gezeigten Variante nach unten hin vollständig vom Schmelzbad 7 bzw. aufgeschmolzenem Werkstückmaterial umschlossen; die Dampfkapillare 8 ist also nicht nach unten hin offen, und die Laserstrahlen 1, 2 treten an einer Unterseite 9 des Werkstücks 3 nicht aus.

Das Schmelzbad 7 ist im Nachlauf der Laserstrahlen 1, 2 (also bezüglich der Vorschubrichtung VR hinter den Laserstrahlen 1, 2, in Fig. 1 rechts der Laserstrahlen 1, 2) deutlich weiter ausgedehnt als im Vorlauf der Laserstrahlen 1, 2. Das Schmelzbad 7 erstarrt hinter dem Schmelzbad 7 wieder, wodurch eine Schweißnaht 10 gebildet wird.

In der gezeigten Variante sind die Laserstrahlen 1, 2 etwas unterhalb der Oberseite 6 des Werkstücks 3 fokussiert, hier auf gleicher Höhe, vgl. die Fokuslagen 11, 12.

Gemäß der Erfindung ist der Flächeninhalt der ersten Strahlfläche 4 des vorauslaufenden ersten Laserstrahls 1 größer als der Flächeninhalt der zweiten Strahlfläche 5 des nachlaufenden zweiten Laserstrahls 2. Die integrierte Laserleistung des ersten Laserstrahls 1 ist größer als die integrierte Laserleistung des zweiten Laserstrahls 2. Der Fokusdurchmesser $FD_1$ des ersten Laserstrahls 1 ist größer als der Fokusdurchmesser $FD_2$ des zweiten Laserstrahls 2, jedoch ist die Leistungsdichte (d.h. die Leistung pro Fläche) des ersten Laserstrahls 1 (gemessen etwa bei der Fokuslage 11) kleiner als die Leistungsdichte des zweiten Laserstrahls 2 (gemessen etwa bei der Fokuslage 12).

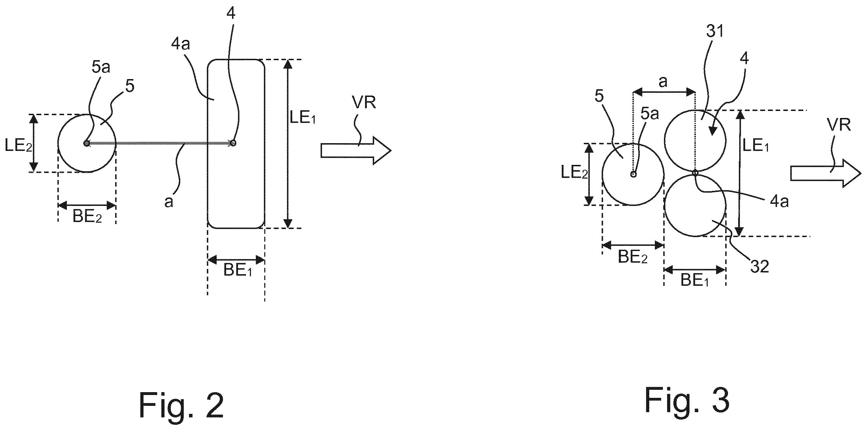

Die Flächen- und Größenverhältnisse von erster Strahlfläche 4 und zweiter Strahlfläche 5 für die Erfindung in verschiedenen Varianten werden in den Figuren 2 bis 8 näher erläutert.

Im Rahmen der Erfindung erzeugt der vorauslaufende erste Laserstrahl 1 ein ausgedehntes Schmelzbad 7, in das der zweite Laserstrahl 2 hineingestrahlt wird. Durch Einhaltung der erfindungsgemäßen Bedingungen insbesondere für die Dimensionen der Strahlflächen 4, 5 und die eingestrahlten Laserleistungen wird erreicht, dass eine Durchschweißung mit vergleichsweise geringem Energieeintrag in das Werkstück 3 bzw. das Schmelzbad 7 erfolgen kann, und eine hohe Nahtqualität insbesondere mit geringer Spritzerbildung sowohl an der Oberseite 6 als auch an der Unterseite 9 des Werkstücks 3 bei hoher Vorschubgeschwindigkeit, vgl. die Vorschubrichtung VR, erreicht wird.

Die **Fig. 2** zeigt schematisch ein Strahlbild umfassend eine erste Strahlfläche 4 und eine zweite Strahlfläche 5 auf der Oberseite eines Werkstücks für ein nicht erfindungsgemäßes Laserschweißverfahren in einer Variante, bei der die erste Strahlfläche 4 näherungsweise rechteckförmig ausgebildet ist, und die zweite Strahlfläche 5 näherungsweise kreisflächenförmig ausgebildet ist.

Die Längenerstreckung $LE_1$ der ersten Strahlfläche 4 ist hier ca. 2,8 mal so groß wie die Längenerstreckung $LE_2$ der zweiten Strahlfläche 5, jeweils gemessen senkrecht zur Vorschubrichtung VR. Entsprechend kann mit der ersten Strahlfläche 4 ein Schmelzbad erzeugt werden, das quer zur Vorschubrichtung VR deutlich weiter ist als die zweite Strahlfläche 5.

In der gezeigten Variante ist die Breitenerstreckung $BE_1$ der ersten Strahlfläche 4 entlang der Vorschubrichtung VR genauso groß wie die Breitenerstreckung $BE_2$ der zweiten Strahlfläche 5. Dadurch wird erreicht, dass über die Breite des Werkstückmaterials, auf die der zweite Laserstrahl gleichzeitig einwirkt, zuvor bereits auch der erste Laserstrahl gleichzeitig eingewirkt hat und eine entsprechende vorbereitende Wärmepropagation oder auch ein entsprechendes vorbereitendes Aufschmelzen erfolgte.

Der Flächeninhalt der ersten Strahlfläche 4 ist hier ca. 3 mal so groß wie der Flächeninhalt der zweiten Strahlfläche 5.

Der Flächenschwerpunkt 4a der ersten Strahlfläche 4 läuft hier dem Flächenschwerpunkt 5a der zweiten Strahlfläche 5 um den Abstand a voraus; die Strahlflächen 4, 5 sind separat voneinander und überlappen nicht.

Mit einer Laserleistung $P_1$=4500 W des ersten Laserstrahls und einer Laserleistung $P_2$=3000 W des zweiten Laserstrahls und bei einer Vorschubgeschwindigkeit v=12 m/min sowie einer Werkstückdicke s=2 mm, bei Fokussierung der beiden Laserstrahlen auf Höhe der Oberseite (Oberfläche) des Werkstücks kann eine sehr gute Nahtqualität in einem Werkstück 3 aus Edelstahl erreicht werden.

Für eine typische Materialkonstante $k_{d,Min}$ von 10 mm$^2$/s für den verwendeten Edelstahl ergibt sich für bei der Werkstückdicke von 2 mm und der Vorschubgeschwindigkeit von 12 m/min ein Wert für

$$d_{Min} = \sqrt{\frac{k_{d,Min} \cdot s}{v}}$$ von hier ca. 0,32 mm. Gemäß der Erfindung sollte der Fokusdurchmesser der zweiten Strahlfläche 5 in der Richtung quer zur Vorschubrichtung VR (wobei dieser Fokusdurchmesser hier $LE_2$ entspricht) größer oder gleich $d_{Min}$ gewählt werden (man beachte, dass hier die zweite Strahlfläche 5 kreisförmig ist, so dass der Fokusdurchmesser der zweiten Strahlfläche 5 in jede Richtung gleich ist, insbesondere mit $LE_2$=$BE_2$). In der vorgestellten Variante beträgt $LE_2$ ca. 0,35 mm, in Übereinstimmung mit obiger Bedingung. Zudem wird erfindungsgemäß empfohlen, den Abstand a zu wenigstens 2*$d_{Min}$ zu wählen. Für die vorgestellte Variante wurde a zu ca. 0,8 mm gewählt, in Übereinstimmung mit dieser Bedingung. Schließlich wird gemäß der Erfindung weiterhin empfohlen, die Längenerstreckung $LE_1$ zu wenigstens 2*$d_{Min}$ zu wählen. In der vorgestellten Variante wurde $LE_1$ zu ca. 0.9 mm gewählt, in Übereinstimmung mit dieser Bedingung.

Die **Fig. 3** illustriert schematisch ein Strahlbild für eine Variante, bei der die erste Strahlfläche 4 zwei Teilstrahlflächen 31, 32 umfasst. Die Teilstrahlflächen 31, 32 sind hier kreisflächenförmig ausgebildet und quer zur Vorschubrichtung VR aufgereiht und voneinander beabstandet. Die Längenerstreckung $LE_1$ der ersten Strahlfläche 4 wird über die Gesamtheit der Teilstrahlflächen 31, 32 bestimmt, also über deren gegenüberliegenden Außenkanten, und ist hier ca. 2,2 mal so groß wie die Längenerstreckung $LE_2$ der zweiten Strahlfläche 5. Die Breitenerstreckungen $BE_1$ und $BE_2$ sind hier wiederum gleich. Der Flächenschwerpunkt 4a der ersten Strahlfläche 4 liegt hier zwischen den Teilstrahlflächen 31, 32 im Abstand a vor dem Flächenschwerpunkt 5a der zweiten Strahlfläche 5. Der Flächeninhalt der ersten Strahlfläche 4 ist hier 2 mal so groß wie der Flächeninhalt der zweiten Strahlfläche 5.

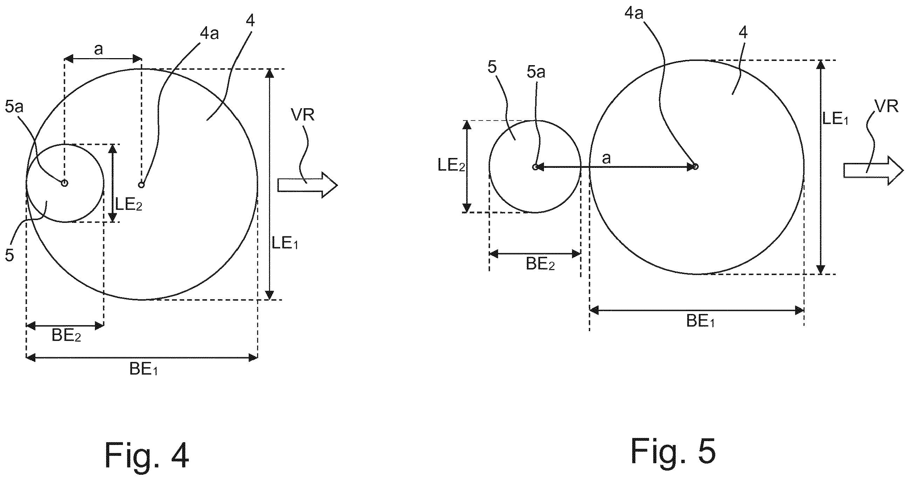

Die **Fig. 4** zeigt ein Strahlbild, wobei in der gezeigten Variante die erste Strahlfläche 4 kreisflächenförmig und groß ausgebildet ist, und die zweite Strahlfläche 5 kreisflächenförmig und klein ausgebildet ist, wobei die zweite Strahlfläche 5 vollständig innerhalb der ersten Strahlfläche 4 angeordnet ist. Im Bereich der zweiten Strahlfläche 5 addiert sich auf dem Werkstück die (lokale) Laserleistung aus beiden Laserstrahlen.

Bezüglich der Vorschubrichtung VR eilt der Flächenschwerpunkt 4a der ersten Strahlfläche 4 dem Flächenschwerpunkt 5a der zweiten Strahlfläche 5 voraus; der Abstand a beträgt hier a=$BE_1$/2-$BE_2$/2. In der gezeigten Variante ist die Breitenerstreckung $BE_1$ ca. 3 mal so groß wie die Breitenerstreckung $BE_2$; entsprechendes gilt auch für die Längenerstreckungen $LE_1$ und $LE_2$.

Die **Fig. 5** zeigt ein Strahlbild einer Variante, bei der die erste Strahlfläche 4 kreisflächenförmig und groß, und die zweite Strahlfläche 5 kreisflächenförmig und klein ausgebildet ist, wobei die zweite Strahlfläche 5 vollständig außerhalb und (bezüglich der Vorschubrichtung VR) hinter der ersten Strahlfläche 4 angeordnet ist. Entsprechend ist der Abstand a der Flächenschwerpunkte 4a, 5a hier größer als die Summe von $BE_1$/2 und $BE_2$/2. Die Längenerstreckung $LE_1$ ist hier ca. 2,4 mal so groß wie $LE_2$; entsprechendes gilt für die Breitenerstreckungen $BE_1$, $BE_2$.

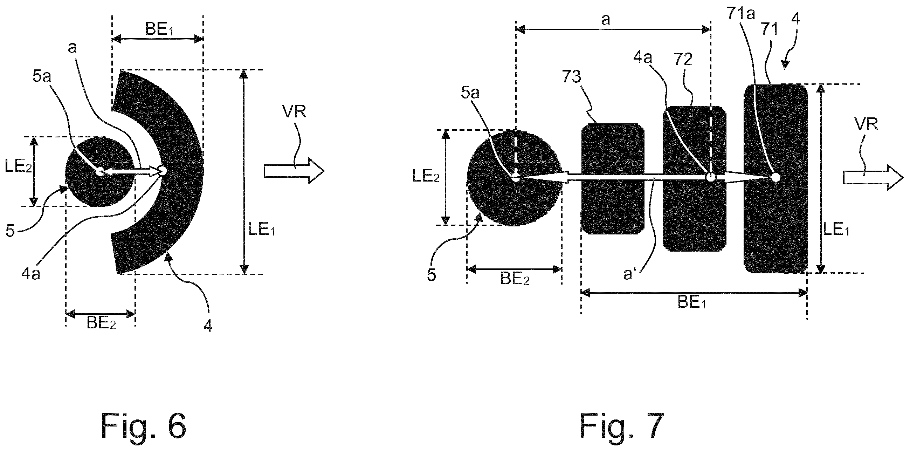

In der **Fig. 6** ist ein Strahlbild zu einer Variante illustriert, bei der die erste Strahlfläche 4 kreisringausschnittförmig ausgebildet ist und die zweite Strahlfläche 5 kreisflächenförmig. In der gezeigten Variante fallen dabei die zugehörigen Kreismittelpunkte der Strahlflächen 4, 5 zusammen, nämlich am Flächenschwerpunkt 5a der zweiten Strahlfläche 5; die Strahlflächen 4, 5 sind jedoch separat voneinander. Der Flächenschwerpunkt 4a der ersten Strahlfläche 4 liegt hier näherungsweise an der hinteren Kante der Strahlfläche 4 und mittig bezüglich der Richtung quer zur Vorschubrichtung VR. Die Breitenerstreckung $BE_1$ der ersten Strahlfläche 4 ist hier ca. 1,33 mal so groß wie die Breitenerstreckung $BE_2$ der zweiten Strahlfläche 5. Die Längenerstreckung $LE_1$ der ersten Strahlfläche 4 ist hingegen ca. 2,9 mal so groß wie die Längenerstreckung $LE_2$ der zweiten Strahlfläche 5. Der Abstand a der Flächenschwerpunkte 4a, 5a ist hier ca. 0,9 mal so groß wie die Breitenerstreckung $BE_2$ der zweiten Strahlfläche 5.

Durch die kreisringausschnittförmige erste Strahlfläche 4 kann eine sehr gleichmäßige Wärmepropagation und auch ein gleichmäßiges Aufschmelzen zum Bereich der zweiten Strahlfläche 5 hin erhalten werden.

In der **Fig. 7** ist ein Strahlbild in einer erfindungsgemäßen Variante dargestellt, bei der die erste Strahlfläche 4 drei separate Teilstrahlflächen 71, 72, 73 umfasst, die bezüglich der Vorschubrichtung VR hintereinander aufgereiht angeordnet sind. Die Teilstrahlflächen 71-73 sind jeweils näherungsweise rechteckförmig ausgebildet, wobei die in Richtung quer zur Vorschubrichtung VR größte Teilstrahlfläche 71 am weitesten vorne angeordnet ist, und die weiteren Teilstrahlflächen 72, 73 nach hinten hin (entgegen der Vorschubrichtung VR) eine abnehmende Längenerstreckung aufweisen. Für die erste Strahlfläche 4 insgesamt bestimmt die vorderste Teilstrahlfläche 71 die Längenerstreckung $LE_1$. Die Breitenerstreckung $BE_1$ der ersten Strahlfläche 4 insgesamt wird zwischen den (bezüglich der Vorschubrichtung VR) äußeren Kanten der Teilstrahlflächen 73 und 71 bestimmt. Vorliegend ist $LE_1$ ca. 2 mal so groß wie $LE_2$, und weiterhin ist $BE_1$ ca. 2,4 mal so groß wie $BE_2$.

In der gezeigten Variante werden alle drei Teilstrahlflächen 71, 72, 73 gleichzeitig eingesetzt, um eine vergleichsweise große Laserleistung über eine große Fläche mit dem ersten Laserstrahl in das Werkstück einzubringen. Für eine gute Nahtqualität wird der Abstand a' zwischen dem Flächenschwerpunkt 71a der vordersten Teilstrahlfläche 71 der ersten Strahlfläche 4 und dem Flächenschwerpunkt 5a der zweiten Strahlfläche 5 zu wenigstens $2*d_{Min}$ gewählt (zur Definition von $d_{Min}$ siehe bei Fig. 1 vorne). Bevorzugt gilt auch für den kleineren Abstand a zwischen dem Flächenschwerpunkt 4a der ersten Strahlfläche 4 insgesamt (der hier innerhalb der zweiten Teilstrahlfläche 72 liegt) und dem Flächenschwerpunkt 5a der zweiten Teilstrahlfläche 5, dass dieser Abstand a ebenfalls wenigstens 2*dmin beträgt.

In einer bevorzugten Ausgestaltung kann die Anzahl der gleichzeitig eingesetzten Teilstrahlflächen 71-73 der ersten Strahlfläche 4 verändert werden und/oder eine Auswahl der eingesetzten Teilstrahlflächen 71-73 vorgenommen werden, insbesondere um je nach Werkstücktyp eine Anpassung an die jeweilige zu schweißende Werkstückdicke s des Werkstücks vorzunehmen. Je dicker das Werkstück, desto weiter vorne vor der zweiten Strahlfläche 5 sollten Teilstrahlflächen 71-73 eingesetzt werden, um entsprechend größere Abstände a' bzw. a einzurichten. Je dicker das Werkstück, desto mehr vorlaufende Teilstrahlflächen sollten eingesetzt werden.

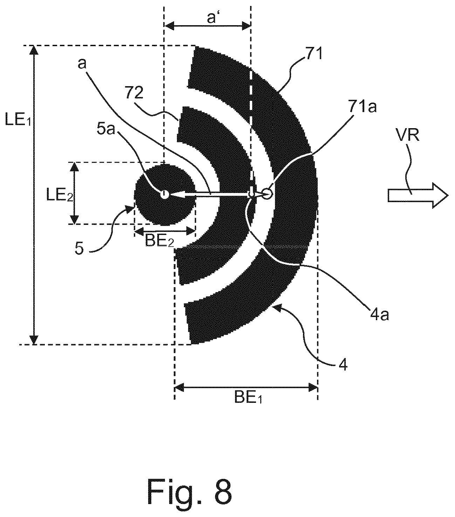

Die **Fig. 8** zeigt ein Strahlbild für eine erfindungsgemäße Variante, bei der die erste Strahlfläche 4 zwei Teilstrahlflächen 71, 72 umfasst, die wiederum bezüglich der Vorschubrichtung VR hintereinander aufgereiht angeordnet sind. Die zweite Strahlfläche 5 ist kreisflächenförmig ausgebildet.

Die Teilstrahlflächen 71, 72 sind jeweils näherungsweise kreisringausschnittförmig ausgebildet, wobei die in Richtung quer zur Vorschubrichtung VR größte Teilstrahlfläche 71 am weitesten vorne angeordnet ist; die zugehörigen Kreismittelpunkte der Teilstrahlflächen 71, 72 und der zweiten Strahlfläche 5 fallen zusammen am Flächenschwerpunkt 5a der zweiten Teilstrahlfläche 5. Für die erste Strahlfläche 4 insgesamt bestimmt die vorderste Teilstrahlfläche 71 die Längenerstreckung $LE_1$. Die Breitenerstreckung $BE_1$ der ersten Strahlfläche 4 insgesamt wird zwischen den (bezüglich der Vorschubrichtung VR) äußeren Kanten der Teilstrahlflächen 72 und 71 bestimmt. Vorliegend ist $LE_1$ ca. 4,8 mal so groß wie $LE_2$, und weiterhin ist $BE_1$ ca. 2,3 mal so groß wie $BE_2$.

Bei dieser Variante unterscheiden sich der Abstand a' (zwischen dem Flächenschwerpunkt 71a der ersten Teilstrahlfläche 71 und dem Flächenschwerpunkt 5a der zweiten Strahlfläche 5) und der Abstand a (zwischen dem Flächenschwerpunkt 4a der ersten Strahlfläche 4 insgesamt und dem Flächenschwerpunkt 5a der zweiten Strahlfläche 5) nicht so stark, so dass hierdurch die gleichzeitige Einhaltung der Bedingungen $a' \geq 2*d_{Min}$ und $a \geq 2*d_{Min}$ leichter ist. Auch in dieser Variante können Anzahl und Auswahl der Teilstrahlflächen 71, 72 der ersten Strahlfläche 4 je nach Werkstücktyp, und insbesondere in Abhängigkeit von der Werkstückdicke s, erfolgen.

Das erfindungsgemäße Verfahren kann insbesondere in Anlagen umgesetzt werden, bei der die unterschiedlichen Strahlflächen 4, 5 bzw. Spots aus unterschiedlichen Laserstrahlen oder durch Aufteilen eines Laserstrahls in zwei oder mehrere Teilstrahlen erzeugt werden. Entsprechendes gilt für Teilstrahlflächen. Vorteilhafte Varianten sind beispielsweise möglich unter Verwendung von:

- einer Doppelkernfaser mit zwei oder mehr parallel nebeneinanderliegenden Faserkernen unterschiedlichen Durchmessers;
- einer Doppelkernfaser mit einer exzentrisch zur umgebenden Ringfaser angeordneten Kernfaser;
- einem diffraktiven optischen Element im Laserbearbeitungskopf, welches das gewünschte Intensitätsprofil (Strahlbild) erzeugt und dabei ggf. veränderbar (z.B. bei Drehung um die optische Achse) verschiedene Intensitätsprofile (Strahlbilder) erzeugen kann.

Beispielsweise durch im Laserbearbeitungskopf angeordnete drehbare optische Elemente kann eine gemeinsame Drehung der ersten und zweiten Strahlflächen oder eine Drehung der ersten Strahlfläche (oder deren Teilstrahlflächen) um die zweite Strahlfläche erfolgen. Dies ermöglicht eine Anpassung der Ausrichtung der Strahlflächen an eine gebogen (nicht linear) verlaufende Schweißfuge.

Mit Hilfe des erfindungsgemäßen Verfahrens können insbesondere Rohre, Profile und Tailored Welded Blanks nachbearbeitungsfrei hergestellt werden. Es treten keine bzw. kaum Spritzer auf, wodurch sich Anlagenstillstandzeiten reduzieren. Der exzentrische Ansatz (mit in Vorschubrichtung gegeneinander verschobenen Flächenschwerpunkten von erster Strahlfläche und zweiter Strahlfläche) reduziert die benötigte Energie zum Laserschweißen, und zudem besteht die Möglichkeit, die Produktivität (über eine höhere Vorschubgeschwindigkeit) zu steigern.

Bezugszeichenliste

| | |
|---|---|
| 1 | erster Laserstrahl |
| 2 | zweiter Laserstrahl |
| 3 | Werkstück |
| 4 | erste Strahlfläche |
| 4a | Flächenschwerpunkt der ersten Strahlfläche |
| 5 | zweite Strahlfläche |
| 5a | Flächenschwerpunkt der zweiten Strahlfläche |
| 6 | Oberseite des Werkstücks |
| 7 | Schmelzbad |
| 8 | Dampfkapillare |
| 9 | Unterseite des Werkstücks |
| 10 | Schweißnaht |
| 11 | Fokuslage des ersten Laserstrahls |
| 12 | Fokuslage des zweiten Laserstrahls |
| 31 | Teilstrahlfläche der ersten Strahlfläche |
| 32 | Teilstrahlfläche der ersten Strahlfläche |
| 71 | vorderste Teilstrahlfläche der ersten Strahlfläche |
| 71a | Flächenschwerpunkt der vordersten Teilstrahlfläche |
| 72 | Teilstrahlfläche der ersten Strahlfläche |
| 73 | Teilstrahlfläche der ersten Strahlfläche |
| a | Abstand der Flächenschwerpunkte von erster Strahlfläche und zweiter Strahlfläche |
| a' | Abstand der Flächenschwerpunkte von vorderster Teilstrahlfläche der ersten Strahlfläche und zweiter Strahlfläche |
| $BE_1$ | Breitenerstreckung der ersten Strahlfläche |
| $BE_2$ | Breitenerstreckung der zweiten Strahlfläche |
| $FD_1$ | Fokusdurchmesser des ersten Laserstrahls |
| $FD_2$ | Fokusdurchmesser des zweiten Laserstrahls |
| $LE_1$ | Längserstreckung der ersten Strahlfläche |
| $LE_2$ | Längenerstreckung der zweiten Strahlfläche |
| VR | Vorschubrichtung |

## Patentansprüche

**1.** Verfahren zum Laserstrahl-Schweißen eines Werkstücks (3),

wobei auf dem Werkstück (3) zumindest mit einem ersten Laserstrahl (1) eine erste Strahlfläche (4) und mit einem zweiten Laserstrahl (2) eine zweite Strahlfläche (5) erzeugt und relativ zum Werkstück (3) entlang einer Vorschubrichtung (VR) geführt werden,
wobei die Flächenschwerpunkte (4a, 5a) der ersten Strahlfläche (4) und der zweiten Strahlfläche (5) nicht übereinstimmen und die erste Strahlfläche (4) der zweiten Strahlfläche (5) vorausläuft,
und wobei eine Längenerstreckung $LE_1$ der ersten Strahlfläche (4), gemessen quer zur Vorschubrichtung (VR), größer oder gleich ist der Längenerstreckung $LE_2$ der zweiten Strahlfläche (5),
wobei der Flächeninhalt der ersten Strahlfläche (4) größer ist als der Flächeninhalt der zweiten Strahlfläche (5),
wobei eine Breitenerstreckung $BE_1$ der ersten Strahlfläche (4), gemessen entlang der Vorschubrichtung (VR), größer oder gleich ist einer Breitenerstreckung $BE_2$ der zweiten Strahlfläche (5),
dass eine Laserleistung des ersten Laserstrahls (1) größer ist als eine Laserleistung des zweiten Laserstrahls (2),
wobei der zweite Laserstrahl (2) in ein durch den ersten Laserstrahl (1) erzeugtes Schmelzbad (7) eingestrahlt wird
wobei das Werkstück (3) aus Edelstahl oder aus Baustahl besteht,
**dadurch gekennzeichnet, dass**
für einen Fokusdurchmesser $FD_2$ des zweiten Laserstrahls (2) mindestens in einer Richtung quer zur Vorschubrichtung (VR) gilt:

$$FD_2 \geq d_{Min}, \text{ mit } d_{Min} = \sqrt{\frac{k_{d,Min} \cdot s}{v}},$$

mit $k_{d,Min}$: eine materialspezifische Konstante zwischen 5 und 20 $mm^2/s$ für Edelstahl und zwischen 8 und 20 $mm^2/s$ für Baustahl, mit s: zu schweißende Werkstückdicke, und mit v: Vorschubgeschwindigkeit des Laserstrahl-Schweißens,
wobei die erste Strahlfläche (4) wenigstens zwei in Vorschubrichtung (VR) aufgereihte, voneinander getrennte Teilstrahlflächen (71, 72, 73) umfasst, und
wobei für einen Abstand a' der Flächenschwerpunkte (71a, 5a) der in Vorschubrichtung (VR) vordersten Teilstrahlfläche (71) der ersten Strahlfläche (4) und der zweiten Strahlfläche (5) gilt:

$$a' \geq a_{Min}, \text{ mit } a_{Min} = 2 \cdot d_{Min}.$$

**2.** Verfahren nach Anspruch 1, **dadurch gekennzeichnet, dass** die Laserstrahlen (1, 2) mit einem oder mehreren Festkörperlasern erzeugt werden.

**3.** Verfahren nach Anspruch 1 oder 2, **dadurch gekennzeichnet, dass** ein Fokusdurchmesser $FD_2$ des zweiten Laserstrahls (2) kleiner ist als ein Fokusdurchmesser FD₁ des ersten Laserstrahls (1) und eine Leistungsdichte des zweiten Laserstrahls (2) größer ist als eine Leistungsdichte des ersten Laserstrahls (1).

4. Verfahren nach einem der vorhergehenden Ansprüche, **dadurch gekennzeichnet, dass** für die Längenerstreckung LE₁ der ersten Strahlfläche (4) gilt:

$$LE_1 \geq b_{Min}, \text{ mit } b_{Min}=2*d_{Min}.$$

5. Verfahren nach einem der vorhergehenden Ansprüche, **dadurch gekennzeichnet, dass** für einen Abstand a zwischen den Flächenschwerpunkten (4a, 5a) der ersten Strahlfläche (4) und der zweiten Strahlfläche (5) entlang der Vorschubrichtung (VR) gilt:

$$a \geq a_{Min}, \text{ mit } a_{Min}=2*d_{Min}.$$

6. Verfahren nach einem der vorhergehenden Ansprüche, **dadurch gekennzeichnet,**

   **dass** mehrere Werkstücke (3) unterschiedlicher Werkstückdicke (s) dem Laserstrahl-Schweißen unterzogen werden,
   und **dass** ein Abstand a zwischen den Flächenschwerpunkten (4a, 5a) der ersten Strahlfläche (4) und der zweiten Strahlfläche (5) entlang der Vorschubrichtung (VR) für Werkstücke (3) mit größerer Werkstückdicke (s) größer gewählt wird.

7. Verfahren nach einem der Ansprüche 1 bis 6, **dadurch gekennzeichnet, dass** die erste Strahlfläche (4) und die zweite Strahlfläche (5) überlappen.

8. Verfahren nach einem der Ansprüche 1 bis 6, **dadurch gekennzeichnet, dass** die erste Strahlfläche (4) und die zweite Strahlfläche (5) voneinander getrennt sind.

9. Verfahren nach einem der vorhergehenden Ansprüche, **dadurch gekennzeichnet, dass** die erste Strahlfläche (4) wenigstens zwei in einer Richtung quer zur Vorschubrichtung (VR) aufgereihte, voneinander getrennte Teilstrahlflächen (31, 32) umfasst,
   insbesondere wobei diese Teilstrahlflächen (31, 32) kreisförmig ausgebildet sind.

10. Verfahren nach einem der vorhergehenden Ansprüche, wobei die Teilstrahlflächen (71, 72, 73) rechteckförmig oder kreisringausschnittförmig ausgebildet sind.

11. Verfahren nach einem der vorhergehenden Ansprüche, **dadurch gekennzeichnet,**

    **dass** mehrere Werkstücke (3) unterschiedlicher Werkstückdicke (s) dem Laserstrahl-Schweißen unterzogen werden,
    und **dass** eine Anzahl NV von in Vorschubrichtung (VR) aufgereihten Teilstrahlflächen (71, 72, 73) mit größerer Werkstückdicke (s) größer gewählt wird.

12. Verfahren nach einem der vorhergehenden Ansprüche, **dadurch gekennzeichnet, dass** die in Vorschubrichtung (VR) aufgereihten Teilstrahlflächen (71, 72, 73) eine auf die zweite Strahlfläche (5) zu abnehmende Längenerstreckung, gemessen quer zur Vorschubrichtung (VR), aufweisen.

13. Verfahren nach einem der vorhergehenden Ansprüche, **dadurch gekennzeichnet, dass** das Laserstrahl-Schweißen als Durchschweißung betrieben wird.

**Claims**

1. A method for laser beam welding of a workpiece (3),

   wherein using at least a first laser beam (1) a first beam area (4), and using a second laser beam (2) a second beam area (5), are generated on the workpiece (3) and guided in a feed direction (VR) relative to the workpiece (3),
   wherein the centroids (4a, 5a) of the first beam area (4) and the second beam area (5) do not coincide, and the first beam area (4) runs ahead of the second beam area (5),
   and wherein a length extension LE₁ of the first beam area (4), measured transversely relative to the feed direction (VR), is greater than or equal to the length extension LE₂ of the second beam area (5),
   wherein the surface content of the first beam area (4) is greater than the surface content of the second beam area (5),
   and wherein a width extension BE₁ of the first beam area (4), measured along the feed direction (VR), is greater than or equal to a width extension BE₂ of the second beam area (5),
   that a laser power of the first laser beam (1) is greater than a laser power of the second laser beam (2),
   wherein the second laser beam (2) is irradiated into a weld pool (7) generated by the first laser beam (1),
   wherein the workpiece (3) consists of stainless steel or structural steel, **characterized in that** the following applies for a focus diameter FD₂ of the second laser beam (2), at least in a direction transverse relative to the feed direction (VR):

$$FD_2 \geq d_{Min}, \text{ with } d_{Min} = \sqrt{\frac{k_{d,Min} \cdot s}{v}},$$

with $k_{d,Min}$: a material-specific constant between 5 and 20 mm²/s for stainless steel, and between 8 and 20 mm²/s for structural steel, with s: a workpiece thickness to be welded, and with v: a feed velocity of the laser beam welding, wherein the first beam area (4) comprises at least two partial beam areas (71, 72, 73) lined up in the feed direction (VR) and separated from one another, and wherein the following applies for a distance a' of the centroids (71a, 5a) of the forward-most partial beam area (71) of the first beam area (4) and the second beam area (5) in the feed direction (VR):

$$a' \geq a_{Min}, \text{ with } a_{Min} = 2 \cdot d_{Min}.$$

2. The method according to claim 1, **characterized in that** the laser beams (1, 2) are generated using one or more solid-state lasers.

3. The method according to claim 1 or 2, **characterized in that** a focus diameter $FD_2$ of the second laser beam (2) is smaller than a focus diameter $FD_1$ of the first laser beam (1), and a power density of the second laser beam (2) is greater than a power density of the first laser beam (1).

4. The method according to one of the preceding claims, wherein the following applies for the length extension $LE_1$ of the first beam area (4):

$$LE_1 \geq b_{Min}, \text{ with } b_{Min} = 2 \cdot d_{Min}.$$

5. The method according to one of the preceding claims, **characterized in that** the following applies for a distance a along the feed direction (VR) between the centroids (4a, 5a) of the first beam area (4) and the second beam area (5):

$$a \geq a_{Min}, \text{ with } a_{Min} = 2 \cdot d_{Min}.$$

6. The method according to one of the preceding claims, **characterized in that**,

a plurality of workpieces (3) of different workpiece thicknesses (s) are subjected to the laser beam welding, and **in that** a distance a between the centroids (4a, 5a) of the first beam area (4) and the second beam area (5) along the feed direction (VR) is selected so as to be larger for workpieces (3) with larger workpiece thicknesses (s).

7. The method according to one of claims 1 to 6, **characterized in that** the first beam area (4) and the second beam area (5) overlap.

8. The method according to one of claims 1 to 6, **characterized in that** the first beam area (4) and the second beam area (5) are separated from one another.

9. The method according to one of the preceding claims, **characterized in that** the first beam area (4) comprises at least two partial beam areas (31, 32) lined up in a direction transverse relative to the feed direction (VR) and separated from one another, in particular wherein these partial beam areas (31, 32) are designed circular.

10. The method according to one of the preceding claims, wherein the partial beam areas (71, 72, 73) are designed square-shaped or circular-ring-shaped.

11. The method according to one of the preceding claims, **characterized in that**,

a plurality of workpieces (3) of different workpiece thicknesses (s) are subjected to the laser beam welding, and **in that** a number NV of partial beam areas (71, 72, 73) lined up in the feed direction (VR) is selected to be larger with a larger workpiece thickness (s).

12. The method according to one of the preceding claims, **characterized in that**, the partial beam areas (71, 72, 73) lined up in the feed direction (VR) have a length extension, measured transversely relative to the feed direction (VR), that decreases toward the second beam area (5).

13. The method according to one of the preceding claims, **characterized in that** the laser beam welding is operated as full penetration welding.

**Revendications**

1. Procédé de soudage au faisceau laser d'une pièce (3),

dans lequel au moins un premier faisceau laser (1) génère une première surface de faisceau (4) sur la pièce (3) et un deuxième faisceau laser (2) génère une deuxième surface de faisceau (5) qui sont guidées par rapport à la pièce (3) le long d'une direction d'avance (VR),

dans lequel les centres de gravité de surface (4a, 5a) de la première surface de faisceau (4) et de la deuxième surface de faisceau (5) ne coïncident pas et la première surface de faisceau (4) précède la deuxième surface de faisceau (5), et dans lequel une extension en longueur $LE_1$ de la première surface de faisceau (4), mesurée transversalement à la direction d'avance (VR), est supérieure ou égale à l'extension en longueur $LE_2$ de la deuxième surface de faisceau (5), dans lequel l'aire de la première surface de faisceau (4) est supérieure à l'aire de la deuxième surface de faisceau (5),

dans lequel une extension en largeur $BE_1$ de la première surface de faisceau (4), mesurée le long de la direction d'avance (VR), est supérieure ou égale à une extension en largeur $BE_2$ de la deuxième surface de faisceau (5),

que la puissance laser du premier faisceau laser (1) est supérieure à la puissance laser du deuxième faisceau laser (2),

dans lequel le deuxième faisceau laser (2) est irradié dans un bain de fusion (7) généré par le premier faisceau laser (1),

dans lequel la pièce (3) est en acier inoxydable ou en acier de construction, **caractérisé en ce que**, pour un diamètre focal $FD_2$ du deuxième faisceau laser (2), au moins dans une direction transversale à la direction d'avance (VR), est valable :

$$FD_2 \geq d_{Min}, \text{ avec } d_{Min} = \sqrt{\frac{k_{d,Min} \cdot s}{v}},$$

avec $k_{d,Min}$ : une constante spécifique au matériau comprise entre 5 et 20 mm²/s pour l'acier inoxydable et entre 8 et 20 mm²/s pour l'acier de construction, avec s : l'épaisseur de pièce à souder, et avec v : la vitesse d'avance du soudage au faisceau laser,

dans lequel la première surface de faisceau (4) comprend au moins deux surfaces de faisceau partielles (71, 72, 73) séparées les unes des autres et alignées dans la direction d'avance (VR), et

dans lequel, pour une distance a' entre les centres de gravité de surface (71a, 5a) de la surface de faisceau partielle (71) la plus en avant dans la direction d'avance (VR) de la première surface de faisceau (4) et de la deuxième surface de faisceau (5), est valable :

$$a' \geq a_{Min}, \text{ avec } a_{Min} = 2 \cdot d_{Min}.$$

**2.** Procédé selon la revendication 1, **caractérisé en ce**

**que** les faisceaux laser (1, 2) sont générés par un ou plusieurs lasers à solide.

**3.** Procédé selon la revendication 1 ou 2, **caractérisé en ce qu'**un diamètre focal $FD_2$ du deuxième faisceau laser (2) est inférieur à un diamètre focal $FD_1$ du premier faisceau laser (1) et une densité de puissance du deuxième faisceau laser (2) est supérieure à une densité de puissance du premier faisceau laser (1).

**4.** Procédé selon l'une quelconque des revendications précédentes, **caractérisé en ce que**, pour l'extension en longueur $LE_1$ de la première surface de faisceau (4), est valable :

$$LE_1 \geq b_{Min}, \text{ avec } b_{Min} = 2 \cdot d_{Min}.$$

**5.** Procédé selon l'une quelconque des revendications précédentes, **caractérisé en ce que**, pour une distance a entre les centres de gravité de surface (4a, 5a) de la première surface de faisceau (4) et de la deuxième surface de faisceau (5) le long de la direction d'avance (VR), est valable :

$$a \geq a_{Min}, \text{ avec } a_{Min} = 2 \cdot d_{Min}.$$

**6.** Procédé selon l'une quelconque des revendications précédentes, **caractérisé en ce que**

plusieurs pièces (3) d'épaisseur de pièce (s) différente sont soumises au soudage au faisceau laser,

et **en ce qu'**une distance a entre les centres de gravité de surface (4a, 5a) de la première surface de faisceau (4) et de la deuxième surface de faisceau (5) le long de la direction d'avance (VR) est choisie plus grande pour les pièces (3) d'une plus grande épaisseur de pièce (s).

**7.** Procédé selon l'une quelconque des revendications 1 à 6, **caractérisé en ce que** la première surface de faisceau (4) et la deuxième surface de faisceau (5) se chevauchent.

**8.** Procédé selon l'une quelconque des revendications 1 à 6, **caractérisé en ce que** la première surface de faisceau (4) et la deuxième surface de faisceau (5) sont séparées l'une de l'autre.

**9.** Procédé selon l'une quelconque des revendications précédentes, **caractérisé en ce que** la première surface de faisceau (4) comprend au moins deux surfaces de faisceau partielles (31, 32) alignées dans une direction transversale à la direction d'avance (VR) et séparées l'une de l'autre, en particulier dans lequel ces surfaces de faisceau partielles (31, 32) sont de forme circulaire.

10. Procédé selon l'une quelconque des revendications précédentes, dans lequel les surfaces de faisceau partielles (71, 72, 73) sont de forme rectangulaire ou en forme de secteur annulaire.

11. Procédé selon l'une quelconque des revendications précédentes, **caractérisé en ce que**

plusieurs pièces (3) d'épaisseur de pièce (s) différente sont soumises au soudage au faisceau laser,
et **en ce qu'**un nombre NV de surfaces de faisceau partielles (71, 72, 73) alignées dans la direction d'avance (VR) est choisi plus grand pour les pièces d'une plus grande épaisseur de pièce (s).

12. Procédé selon l'une quelconque des revendications précédentes, **caractérisé en ce que** les surfaces de faisceau partielles (71, 72, 73) alignées dans la direction d'avance (VR) présentent une extension en longueur, mesurée transversalement à la direction d'avance (VR), décroissante en direction de la deuxième surface de faisceau (5).

13. Procédé selon l'une quelconque des revendications précédentes, **caractérisé en ce que** le soudage au faisceau laser est réalisé en soudage traversant.

Fig. 1

Fig. 2

Fig. 3

EP 3 880 398 B1

Fig. 4

Fig. 5

EP 3 880 398 B1

Fig. 6

Fig. 7

EP 3 880 398 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015112537 A1
- DE 102016222357 A1
- WO 2018011456 A1
- DE 10261422 A1
- EP 1007267 B1
- JP 2004358521 A
- JP 2004154813 A
- DE 102015207279 A1
- US 2014076865 A1

- JP 2009178768 A
- JP 2002219590 A
- DE 102016218938 A1
- US 20170368638 A1
- US 20180217408 A1
- WO 2018099851 A1
- DE 102016105214 A1
- WO 2018054850 A1